# EUROPEAN PATENT SPECIFICATION

(11) **EP 2 336 723 B1**
(45) Date of publication and mention of the grant of the patent: **09.11.2016**
(21) Application number: 09179331.5
(22) Date of filing: 15.12.2009
(51) Int. Cl.: G01C 21/34

(54) **Assisting a user in arriving at a destination in time**
Unterstützung eines Benutzers zur rechtzeitigen Ankunft an einem Ziel
Assistance d'un utilisateur pour arriver à l'heure à une destination

(43) Date of publication of application: 22.06.2011
(73) Proprietor: Vodafone Holding GmbH, 40213 Düsseldorf (DE)
(72) Inventor: Schröder, Jan, 50823 Köln (DE); Chihaya, Tyson, 10437 Berlin (DE); Wiseman, Maya, 40217 Düsseldorf (DE)
(74) Representative: Jostarndt Patentanwalts-AG

(56) References cited:
- EP-A1- 1 669 719
- EP-A2- 1 381 009
- WO-A1-2009/033450
- US-A- 5 568 390
- US-A- 6 067 502
- US-A1- 2005 055 157
- US-A1- 2008 294 333

## Description

The invention relates to the assistance of a user in finding a route to a destination point. More specifically, the invention relates to a method, a computer program and a system for assisting a user in arriving at a destination point within a time limit.

There are known navigation devices, which assist its user to find a route to a user-defined destination point. Such navigations devices may be small portable devices, which can be carried by the user or installed in a vehicle, or devices which are fixedly integrated into vehicles, for example. A navigation device calculates a route from a position of the user and/or the device to a user-defined destination point and guides the user along the calculated route. The position of the user and/or the device may be determined using a satellite-based positioning system, such as the GPS (Global Positioning System). Usually, the navigation device also calculates an estimated time of arrival at the destination point.

US 2005/0055157 A1 discloses a navigation system for motor vehicles calculation a particular route between a first and a second location, where the selection of this particular route is further optimized with respect to the requirements of the user, e.g. fastest route with minimized fuel consumption. The navigation system does not provide any information to the user about accessible areas beside the particular proposed route during traveling along the particular route in order to meet any time requirement.

EP 1669719 A1 discloses a guide route search device and a navigation system, where the guide route search device finds a guide route via plural route points of interest for the user, where the navigation system guides the user along this particular route enabling the user to arrive at the respective route points being of interest in a desired state. Also this navigation system does not provide any information to the user about accessible areas beside a particular proposed route during traveling along the particular route in order to meet any time requirement.

US 2008/0294333 A1 discloses a method for operating a navigation system for calculating a travel route, whereby a starting point and a destination point are entered via an input device and whereby a trip calculator calculates a travel route leading from the starting point to the destination point by taking into account road network data, whereby a guideline time is additionally input via an input device whereby the trip calculator calculates a travel route which leads from the starting point to the destination point in a predicted travel time corresponding essentially to the guideline time by taking into account road network data. Two or more travel routes may be presented to a user and the user selects one of the presented routes.

US 5,568,390 discloses a navigation system to be mounted on a vehicle for carrying out a route search and displaying the searched route. Traffic jam information and the like are obtained by a beacon receiver and an input part inputs time as a driving condition. An ECU executes a predetermined calculation based on map data of a CD-ROM and traffic jam data and to obtain a range and routes reachable within the input time and to display the same. In case of residual fuel as a condition, the reachable range by this fuel is displayed. A display of gasoline stands as information for expanding reachability is also executed.

Often, the user of a navigation device whishes to reach the destination point at a predetermined point in time, which may be the time of an appointment made by the user, for example. However, the period between the start and the arrival at the destination point may be longer than the period which is necessary to pass along the calculated route with the usual travelling speed. In such a situation, the user has to pass along the route with reduced speed and/or to pause one or more times, when he does not want to accept to reach the destination point too early. This is inconvenient for the user and leads to a waste of the user's surplus of time.

Therefore, it is an object of the present invention to assist the user in reaching a geographic destination point by a predetermined point in time and to use a surplus of time for reaching the destination point in an interesting way.

The object is achieved by a method having the features of claim 1, by a computer program having the features of claim 8 and by a system having the features of claim 9. Embodiments of the method, the computer program and the system are given in the dependent claims.

The invention involves the idea to provide the user a whole area called accessible area herein, in which he can move to reach the destination point, instead of a defined route. Within the area, the user can choose a route to the destination point himself, and the area is determined in such a way that the destination point can be reached within the time limit, when the user moves with a predetermined speed. Instead of one route, the accessible area comprises a plurality of possible routes to the destination point. Thus, the user can use his surplus of time to strife through and explore the accessible area, and he can be sure to reach the destination point in time.

In particular, the accessible area is determined such that it includes at least two routes from the starting position to the destination point and an area between the routes, the two routes not overlapping each other completely. The routes itself do not have to be calculated, it is sufficient to calculate the area. Furthermore, the area may not be calculated exactly, but an estimation of the accessible area may be determined, particularly to save computational resources. The starting position may be a position of the user determined using a position determination unit.

In one embodiment of the method, the computer program and the system, the destination point and the time limit are specified by the user. Further, the accessible area may be estimated based on an average speed, the average speed being determined based on a means of transportation of the user. The means of transportation may be specified by the user; in particular the user may select his means of transportation from a list. As an alternative, the user may specify the average speed directly.

In a further embodiment of the method, the computer program and the system, the accessible area includes a plurality of marking points selected from a predetermined set of marking points on roads in a road network, a contour of the accessible area being determined at least partly based on predetermined areas around the marking points. The areas may be circular disks, for example, and the accessible area may comprise a union of the areas around the marking points. It is one advantage of this embodiment that marking points allow discretizing the relevant geographic area so that the estimation of the accessible area is simplified.

Preferably, the estimated accessible area is marked in a depiction of a map. In this regard, the construction of the accessible area from areas around marking pointsleads to an irregular, cloud-like contour of the accessible area which allows for an attractive presentation thereof. The presentation within a map allows the user to orientate himself with the help of the map and to compare his position in the map with the accessible area.

After having specified the time limit and the destination point, the accessible area is updated at predetermined time intervals based on an updated position and/or a remaining portion of the time limit. Due to the progression of time an updated accessible area is reduced compared to the foregoing estimation. Thus, when time progresses, the accessible area shrinks and its boundaries approach the destination point. In a sufficiently large accessible area, the user may choose one of the possible routes which do not allow reaching the destination point in time. However, the updating of the accessible area guides the user in a direction towards the destination point without prescribing a specific route to take.

Preferably, the position of the user, particularly the starting position and/or the updated position is detected using a positioning system. The positioning system may be a satellite-based positioning system, particularly a GPS.

A further embodiment of the method, the computer program and the system provides that a determined position is compared with the accessible area and that an indication, preferably a non-visual indication, is given, when the determined position is outside of that accessible area. Thus, the user is informed in a special way, when he leaves the accessible area and risks to arrive at the destination point after the time limit. In this regard, a non-visual indication has the advantage that the user does not have to look on a visual presentation on a device, when moving in the accessible area. The non-visual indication may be an acoustic and/or a haptic indication. The determined position compared with the accessible area may be the updated position used for calculating an updated accessible area or another (updated) position not determined for calculating an updated accessible area.

In one example, the computer program and the system, the estimation of the accessible area is determined based on an intersection of at least two intermediate areas, a first intermediate area being determined based on a boundary which can be reached from the starting position or an updated position as starting point by the end of the time limit when moving with the average speed and the second intermediate area being determined based on a boundary which can be reached from the destination point as starting point by the end of the time limit when moving with the average speed. The boundary may particularly be a circle having a radius which is calculated based on the time limit and the average speed. The determination of the accessible area based on the two intermediate areas has the advantage to reduce the complexity of the determination and thus to require relative few computational resources. In a further embodiment of the method, the computer program and the system, a plurality of routes from the starting position or an updated position to the destination point is calculated, the routes being traversable within the time limit, and the area is determined such that it includes the routes and an area between the routes. Such a procedure generally requires more computational resources, but may lead to more exact results for the accessible area.

In one embodiment of the invention, the system comprises a navigation device including a position determination unit adapted to determine the position and at least one output for outputting the information on the estimated area to the user.

According to the type of the provided output, the navigation device may comprise a visual output means, an acoustic output means, a haptic output means or more than one of the aforementioned output means. The navigation device may be a satellite-based navigation device and/or a mobile communication device. A satellite-based navigation device uses signals of a satellite-based positioning system, such as, for example, the GPS, to determine its position. When the navigation device is configured as mobile communication device (what may be the case in addition to the satellite-based configuration), it can be used for mobile communications via a wireless communication network.

A further embodiment of the invention comprises that the processing unit is included in a server unit connected to the device, the server unit transmitting the information on the estimated area to the device. This allows removing the determination of the accessible area, which requires relatively high computation power, from the navigation device to a server. Thus, the navigation device requires less computation resources.

The aforementioned and other aspects of the invention will be apparent from and elucidated with reference to the embodiments described hereinafter making reference to the accompanying drawings.

In the drawings
- Fig. 1: is a schematic depiction of a system for assisting a user of a navigation device in arriving at a destination point within a time limit,
- Fig. 2a: is a schematic and exemplary depiction of an accessible area,
- Fig. 2b: is a schematic depiction of an updated accessible area in comparison to an accessible area in a foregoing situation,
- Fig. 3a: shows a circle overlaying a road network, the circle being used for calculating an intermediate area,
- Fig. 3b: is an exemplary depiction of an intermediate area determined based on the circle and
- Fig. 3c: shows two intermediate areas which are intersected to determine an accessible area.

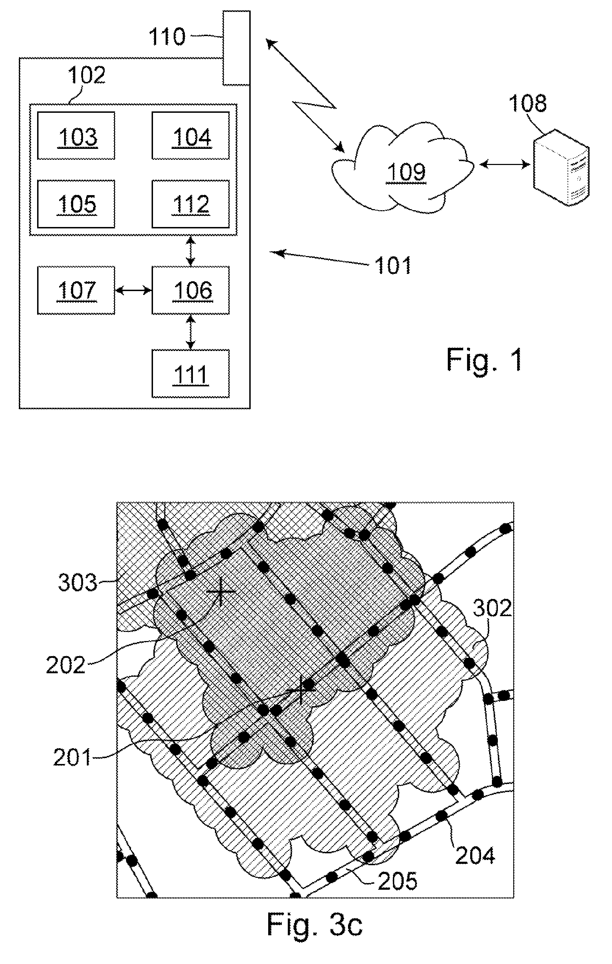

Figure 1 shows a schematic block diagram of a navigation device 101 of a user. The navigation device 101 may be a dedicated navigation device, which is portable or integrated into a vehicle. As an alternative, the navigation device 101 may be a portable multi-purpose device having navigation functionalities. An example of such device is communication device, such as a mobile telephone, a PDA (Personal Digital Assistant) or similar, comprising navigation functionality.

The navigation device 101 comprises a user interface 102 including a display unit 103 and preferably a loudspeaker 104 for outputting acoustic signals. In addition or as an alternative to the loudspeaker 104, the navigation device 101 may comprise an actor 112 for outputting haptic signals. The haptic signals may be vibrations of the navigation device 101 caused by the actor 112. Further, the user interface 102 includes an input unit 105, which allows the user to make inputs and which may be configured as a keypad, for example. The operation of the navigation device 101 is controlled by a processor unit 106, which has access to the components of the user interface 102 and is configured to execute programs loaded into the processor unit 106. The processor unit 106 is also connected to a memory unit 107, which particularly stores map data allowing the processor unit 106 to control the display unit 103 to display map sections. The map data particularly comprise the road network in a given geographic region covered by the map data. The memory unit 107 may be a non-volatile main memory of the navigation device 101 or it may extend a memory fixedly integrated into the navigation device 101. In the latter embodiment, the memory unit 107 may be a data carrier, such as, for example, a Compact Disc (CD), a DVD, a memory card or a memory stick, which is removably connected to the navigation device 101.

In the embodiment depicted in figure 1, the navigation device 101 can also be connected to a server unit 108, which is configured to execute functions for the navigation device 101 upon request. The navigation device 101 may be connected to the server unit 108 via a communication network 109. For connecting to the communication network 109, the navigation device 101 comprises a connection interface 110. The communication network 109 and the connection interface 110 may be configured such that they allow establishing a connection between the navigation device 101 and the server unit 108 wirelessly. Thus, the connection interface 110 may be a radio interface and the communication network 109 may comprise a wireless network. In particular, the communication network 109 may comprise a mobile communication network.

Further, the navigation device 101 comprises a position determining unit 111 for determining the position 201 of the navigation device 101. The position determining unit 111 may work satellite-based and may particular use the GPS or a similar satellite-based system known to a personal skilled in the art. In addition to satellite signals, the position determining unit 111 may evaluate further signals in order to determine the position 201 of the navigation device 101, such as signals of access points of the communication network 109 ("Assisted GPS").

Using the user interface 102, the user of the navigation device 101 can specify a destination point 202. For this purpose, the user may enter an address or the geographic coordinates (longitude and latitude) of the destination point 202, the user may select the destination point 202 from a list including points of interest or the user may mark the destination point 202 within a map section displayed by the display unit 103. In addition, the user can give a point in time by which he wishes to reach the destination point 202. The point in time may be specified by entering the corresponding absolute time or by entering a time period for reaching the destination point 202. Thereby the user defines a time limit as of the current time within which the destination point 202 is to be arrived at.

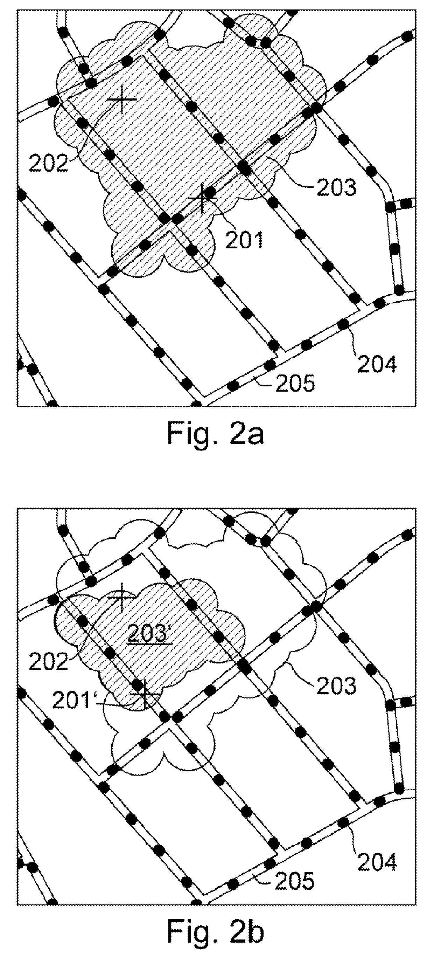

Based on the user-defined data about the destination point 202 and the time limit to reach the destination point 202, a geographical area 203 is estimated and displayed by the display unit 103 of the navigation device 101, which the user can traverse within the time limit before arriving at the destination point 202 by the due time. The area 203 is also referred to as accessible area herein and an exemplary representation thereof is schematically shown in figure 2a.

The accessible area 203 essentially comprises points the user can traverse respectively before reaching the destination point 202 within the defined time limit, when starting at the current determined position 201 of the navigation device 101, which is treated as the starting position. When, starting from the current position 201, the user first moves to any point included in the accessible area 203 and then moves to the destination point 202, the user will reach the destination point 202 by the user-defined point in time. This point in time marks the upper threshold for arriving at the destination point 202, when traversing another point of the accessible area 203 before turning to the destination point 202. Of course, there are points in the accessible area 203 via which the destination point 202 can be reached before the user-defined point in time. However, the points on the boundary of the estimated accessible area 203 (approximately) correspond to points via which the destination point 202 can be reached at the user-defined point in time. Thus, the user can strife in the estimated accessible area 203 and find his way to the destination point 202 himself without arriving at the destination point 202 too late (i.e. later than the user-defined point in time).

The user of the navigation device 101 usually moves on roads. Therefore, the accessible area 203 is estimated such that it particularly includes road sections, which can be traversed by the user to reach the destination point 202 in time. Here, those roads are considered, which are included in the map data stored in the memory unit 107. Furthermore, the accessible area 203 may also cover regions between the roads the user can take to move to the destination point 202.

The estimated accessible area 203 may be presented at the display unit 103 of the navigation device 101. Preferably, a representation of the accessible area 203 is rendered in a corresponding map section generated from the map data stored in the memory unit 107 and is displayed by means of the display unit 103. In one embodiment, the accessible area 203 transparently overlays the map section such that the user can recognize the accessible area 203 and can view the road network of the map section in the accessible area 203. In particular, the accessible area 203 may be represented by a colored area that transparently overlays the map section in the display unit 103. As an alternative, only the estimated boundary of the accessible region 203 may be presented in the map section. In figure 2a, the accessible area 203 is presented as a hatched area. Herein, as in the further figures, one exemplary selected road of the road network in the map section has been labeled using the reference numeral 205. As usual, the position 201 of the navigation device 101 determined using the position determining unit 111 may also be marked in the map section displayed by the display unit 103 and regularly updated when the user moves. Thus, the user can determine his position relative to the road network of the map section and to the accessible area 203.

In one embodiment, the relevant geographic region (i.e. the region in which the accessible area 203 is located) is covered with predetermined marking points. In figure 2a one marking point, which has been chosen by way of example, is labeled using the reference numeral 204. Since the accessible area 203 especially covers the roads in the geographic region, the marking points may be located on these roads only. In particular, to each road in the geographic region marking points may be allocated in regular distances. The marking points may be included fixedly in the map data used for estimating the accessible area 203 (which does not necessarily have to be the map data stored in the navigation device 101, as will be described later), or they may be created when calculating the accessible area 203. In particular, the marking points discretize the relevant geographic area leading to simplified determination of the accessible area 203

If such marking points are used, the estimation of the accessible area 203 may be determined by selecting those marking points of the relevant region via which the user can reach the destination point 202 within the user-defined time limit. The other marking points may be discarded. The accessible area 203 is then determined based on the selected marking points. In particular, circular disks with a predetermined radius may be drawn around the selected marking points with the marking points in its centers. The accessible area 203 may be determined as the union of the circular disks, i.e. it may include the circular disks around all selected marking points. This leads to a cloud-like shape of the accessible area 203, which is also depicted in figure 2a and which provides an attractive presentation of the accessible area 203. Although the marking points are depicted in figure 2a, they are preferably not shown in the display unit 103 of the navigation device 101 since they are only auxiliary means for determining the accessible area 203 and do not have meaning for the user of the navigation device 101.

If the marking points are located only on the roads of the geographical region, the boundary of union of the circular disks may have greater recesses, when there is a too large space between roads. Such recesses may be included at least partly in the accessible area 203 by creating one or more further marking points between such roads around which circular disks are drawn which are incorporated into the accessible area 203 or by drawing a preferably curved connection line connecting opposing points of the original boundary in a recess such that the connection line forms the relevant boundary of the accessible area 203. Likewise, holes in the union area of the circular disks may be included in the accessible area 203.

After the user of the navigation device 101 has entered the destination point 202 and specified the time limit to reach the destination point 202, the accessible area 203 is estimated based on the current position 201 as starting positions, the destination point 202 and the time limit, and the estimated accessible area 203 is depicted for the first time. In order to reach the destination point 202, the user may then start to move within the accessible area 203. At regular time intervals the estimation of the accessible area 203 is repeated based on the updated position 201' of the navigation device 101 and the remaining part of the time limit in order to determine an updated estimation of the accessible area 203. The repeated calculation may be done in the same way as the first calculation using the updated position 201' and the remaining part of the time limit instead of the original starting position 201 and the original time limit.

After an updated accessible area 203' has been determined it replaces the accessible area 203 determined before in the map section displayed by the display unit 103. An updated estimation of the accessible area 203 is smaller than the preceding estimation (if the user stays in the relevant accessible area 203) since the time limit for reaching the destination point 202 has become shorter. In particular, an updated accessible area 203' is a subarea of the accessible area 203 estimated before. Thus, when the user approaches the destination point 202 on a self-chosen route, the relevant accessible area 203 shrinks while time progresses. In figure 2b an updated, reduced accessible area 203 is depicted which has been determined relative to an updated position 201' of the navigation device 101. The updated accessible area 203' is shown in comparison to a foregoing accessible area 203.

As long as there is sufficient time left to reach the destination point 202, each estimated accessible area 203 includes a plurality of possible routes the user can choose without reaching the destination point 202 within the time, e.g. a route comprising one or more circles around the destination point 202. However, the number of such routes decreases when the accessible area 203 shrinks. Thus, the user of the navigation device 101 is guided to the destination point 202, when he stays in the actual accessible area 203. In order to stay in the accessible area 203 and to reach the destination point 202 in time, he only has to change his travelling direction, when he reaches the boundary of the accessible area 203 at one point in time. Thus, the user is guided to the destination point 202 without prescribing a specific route for this purpose. Rather, the user can freely choose a route himself within the boundary of the accessible area 203.

While the accessible area 203 for reaching the destination point 202 in time is provided, the processor unit 106 may monitor the position 201 of the navigation device 101 determined using the position determining unit 111 and may compare the determined position 201 with the accessible area 203. When the position 201 of the navigation device 101 is found to be outside the accessible area 203, an alert signal may be output. Preferably, the alert signal is an acoustic signal that is output using the loudspeaker 104 of the navigation device 101 and/or a haptic signal output using the corresponding actor 112 of the navigation device 101. Thus, the user is informed about leaving the accessible area 203 without having to look on the display unit 103. After the alert signal has been started it may be hold up until the user moves back into the accessible area 203 or stops the alert signal manually.

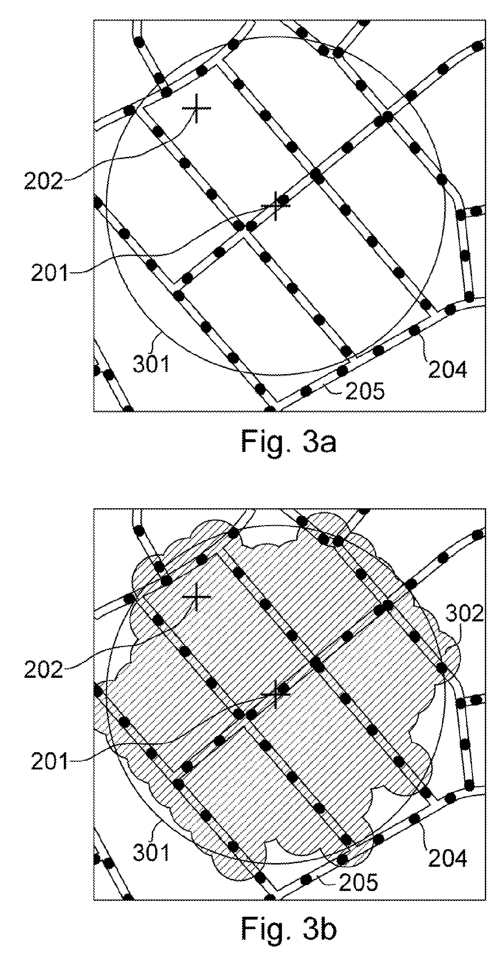

In the following, the determination of an estimate of the accessible area 203 is described referring to figures 3a-3c. It is assumed that the map data used for estimating the accessible area 203 comprises the above-described marking points. As depicted in the figures, the marking points are assigned to the roads in the relevant map section in which the accessible area 203 is located.

For determining an estimation of the accessible area 203, a maximal distance, which can be covered by the user within the time limit, is determined. Preferably, the maximal distance is calculated from the time limit defined by the user (or the remaining portion thereof, when an updated accessible area 203' is estimated) and an average speed of the user. The average speed has a predetermined value which may be chosen depending on the means of transportation used by the user, i.e. whether the user travels by foot, by bicycle or by another vehicle. For choosing the average speed, the used means of transportation may be specified by the user when entering the destination point 202 into the navigation device 101 and defining the time limit. Here, a list of possible means of transportation may be presented to the user from which he can choose his transportation means. As an alternative, the average speed may be entered directly, or it may be fixedly predetermined. When the average speed is referred to as V, the time limit as T and the maximal distance as Rmax, the maximal distance may be calculated as Rmax = V x T.

When the maximal distance has been generated, a circle 301 around the position 201 of the navigation device 101 is generated. As described before, the position 201 is determined using the position determining unit 111. The centre of the circle 301 is the determined position 201 and the radius corresponds to the calculated maximal distance. An example of a circle 301 generated in such a way is depicted in figure 3a. The circular disk comprises points, which the user can reach within the time limit when travelling at the average speed.

The circle 301 is used to select the marking points in the map section which are used to generate a first intermediate area 302, which is depicted in figure 3b. In one embodiment those marking points are selected, which are located in the circle 301 and which are connected to the determined position 201 through contiguous road sections of the map data. Thus, those marking points are excluded which cannot be reached via a contiguous route along one or more roads located in the circle 301 completely.

For this purpose, an algorithm may be executed, which follows a route through the road network included in the map data from the determined position 201 and includes the marking points on the route until a marking point is reached, which is located outside the circle 301. When such a marking point, which is not included in the selection, has been reached, the algorithm traverses the route backwards until a road junction is reached from which at least one road branches off that has not been traversed yet. Then, the algorithm follows a modified route via this road and includes marking points on the route into the selection until it reaches a marking point outside the circle 301 again (the modified route is understood to include the first route up to the mentioned junction and the new part starting from the junction). Again, this marking point is not included in the selection and the (modified) route is traversed back to a junction where a new road branches off and from which a modified route is traversed in the aforementioned way. The procedure is repeated until all routes from the position 201 (i.e. the centre of the circle 301) to its boundary have been traversed. In the procedure, the algorithm will traverse at least one route backwards up to the position 201. If a road section is connected to the position 201 that does not have been traversed before, a new route is traversed via this road section. Otherwise, the procedure ends.

The intermediate area 302 is then determined from the selected marking points. In one embodiment, circular disks are drawn around the selected marking points and the intermediate area 302 is determined as a union of the circular disks in a way already described before. Possible greater recesses may also be included in the intermediate area 302 as described before; possible holes may also be incorporated. In such a way an intermediate area 302 is determined as it is shown in figure 3b by way of example.

Similar to the first intermediate area 302, a second intermediate area 303 is determined based on the destination point 202. In particular, the second intermediate area 303 may be determined in the same way as the first intermediate area 302 with the destination point 202 in the centre of the circle instead of the determined position 201 of the navigation device 101. The radius of the circle again corresponds to the maximal distance. By way of example, such a second intermediate area 303 is partly depicted in figure 3c in addition to the intermediate area 302 determined for the determined position 201 of the navigation device 101.

The accessible area 203 is calculated as the intersection of the first intermediate area 302 and the second intermediate area 303. This means that the accessible area 203 comprises the points which are included in both the first intermediate area 302 and the second intermediate area 303.

As an alternative, the intermediate areas 302 and 303 may be constructed in another way as the way described before. For instance, only marking points of the accessible area 203 may be selected at first. Here, from the selected marking points in the circle only those marking points may be included which are present in both circles around the determined position 201 and the destination point. Or, the intersection of the circles may be determined at first and the marking points may be selected from the intersection by means of an algorithm of the type described before. When the marking points of the accessible area 201 have been selected, the accessible area 203 may be determined as the union of circular disks around the selected marking points in a way similar to the way described before.

In the aforementioned example, the accessible area 203 is determined based on the intersection of two intermediate areas 302, 303 which are estimated from a boundary which can be reached by the user within the defined time limit when moving with the average speed. This determination of the accessible area 203 is not exact, but allows a relatively simple determination of an estimation of the accessible area 203, particular by use of relative few computational resources.

In one embodiment, a plurality of routes from the determined position 201 of the navigation device 101 to the destination point 202 can be determined using a suitable route finding algorithm. The routes may be calculated or selected such that they can be traversed with an average speed within the user defined time limit, which defines an upper threshold for the timely length of the routes. The accessible area 203 may be calculated from such routes by including the routes and the area between the routes, or the determined routes may be used to select the marking points for constructing the estimation of the accessible area 203. Such a determination is more complex and requires more computational resources, but may lead to more exact results for the accessible area 203.

For estimating and presenting the accessible area 203 and for monitoring the position 201 of the navigation device 101 relative to the accessible area 203, the navigation device 101 may comprise an arrangement, which may be a computer program executed in the processer unit 106 of the navigation device 101. The computer program may supplement conventional navigation software for determining and presenting specific routes to a destination. In this case, the computer program and the conventional navigation software both use the map data stored in the memory unit 107. The computer program can be part of the navigation software, when the latter is installed in the navigation software, or the computer program can be installed later in addition to existing navigation software. As an alternative, the computer program may be a stand-alone program which does not supplement further navigation software in the navigation device 101.

In the embodiment depicted in figure 1, a distributed system is used for estimating and presenting the accessible area 203. The system comprises the navigation device 101 and the server unit 108 and the functionalities of each component may be provided by computer programs installed in the navigation device 101 and the server unit 108. In the system, the estimation of the accessible area 203 is determined in the server unit 108. For this purpose, the navigation device 101 communicates the determined position 201, the destination point 202, the user-defined time limit and the average speed (if not fixedly predetermined) to the server unit 108. Using the data received from the navigation device 101, the server unit 108 determines the estimate of the accessible area 203 based on map data stored in the server unit 108. The estimate is then sent to the navigation device 101 where it is presented to the user in a way de-described before. Preferably, the server unit 108 disposes of the same map data as the navigation device 101. Thus, the accessible area 203 determined in the server unit 108 using the map data of the server unit 108 can be presented in a map section at the navigation device 101 without any difficulties. For allowing the server unit 108 to calculate updated accessible areas 203', the navigation device 101 regularly sends its updated position 201' to the server unit 108. The server unit 108 uses the updated positions 201' to determine updated accessible areas 203', which are communicated to the navigation device 101 and presented to the user.

Thus, in the system depicted in figure 1, the most resource-consuming process, i.e. the determination of the accessible area 203, is removed from the navigation device 101 to the server unit 108. Thus, less computational resources are required in the navigation device 101 so that also navigation devices 101 can be used which do not have sufficient resources to determine the accessible area 203.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the words "comprising", "including" and similar do not exclude other elements or steps, and the indefinite article "a" or "an" does not exclude a plurality. A single processor or other unit may fulfill the functions of several items recited in the claims. A computer program may be stored and/or distributed on a suitable medium, such as an optical storage medium or a solid-state medium supplied together with or as part of other hardware, but may also be distributed in other forms, such as via the Internet or other wired or wireless telecommunication systems.

Any reference signs in the claims should not be construed as limiting the scope.

## Claims

1. A computer implemented method for assisting a user in arriving at a destination point (202) within a specified time limit after receiving a starting position (201) and the destination point (202), the method further comprises
- calculating a plurality of routes from the starting position (201) to the destination point (202), wherein the routes being traversable within the specified time limit,
- estimating an accessible geographic area (203) which can be traversed by the user with a predetermined speed before reaching the destination point (202) within the specified time limit, when starting from the starting position (201), wherein the accessible geographic area (203) is determined such that it includes the routes and an area between the routes,
- providing during traveling information on the estimated accessible geographic area (203) for presentation,
- receiving an updated position (201') and
- wherein after having specified the time limit and received the destination point (202), the accessible geographic area (203) is updated at predetermined time intervals, the update of the area being based on the updated position (201') and on a remaining portion of the time limit by calculating a plurality of routes from the updated position (201').

2. A method according to claim 1, wherein the destination point (202) and the time limit are specified by the user.

3. A method according to claim 1 or 2, wherein the accessible geographic area (203) is estimated based on an average speed, the average speed being determined based on a means of transportation of the user.

4. A method according to one of the preceding claims, wherein the accessible geographic area (203) includes a plurality of marking points (204) selected from a predetermined set of marking points on roads in a road network, a contour of the accessible geographic area (203) being determined at least partly based on predetermined areas around the marking points.

5. A method according to one of the preceding claims, wherein the starting position (201) and/or the updated position (201') is detected by a position determination unit (111).

6. A method according to one of the preceding claims, wherein the estimated accessible geographic area (203) is marked in a depiction of a map.

7. A method according to one of the preceding claims, wherein a determined position is compared with the accessible geographic area (203), and wherein an indication, preferably a non-visual indication, is given, when the determined position (201) is outside of that accessible geographic area (203).

8. A computer program including instructions to execute a method according to one of the preceding claims on at least one processing unit.

9. A system for assisting a user in arriving at a destination point (202) within a specified time limit comprising a processing unit (106; 108), an output, and a determination unit (111) adapted to detect a starting position and an updated position (201'),
the processing unit (106; 108) is configured to calculate a plurality of routes from the starting position (201) to a destination point, wherein the routes being traversable within the specified time limit, when the user moves with a predetermined speed, wherein an accessible geographic area (203) is determined such that it includes the routes and an area between the routes, the output is configured to provide information on the estimated accessible geographic area (203) for presentation to the user during traveling, and wherein the processing unit (106; 108) is adapted, after having specified the time limit and received the destination point (202), to update the accessible geographic area (203) at predetermined time intervals, the update of the area being based on the updated position (201') and on a remaining portion of the time limit by calculating a plurality of routes from the updated position (201').

10. A system according to claim 9, wherein the system comprises a navigation device (101) which is a satellite-based navigation device (101) and/or a mobile communication device.

11. A system according to claim 9, wherein the processing unit (106; 108) is included in a server unit (108) connected to the output, the server unit is configured to transmit the information on the estimated accessible geographic area (203) to the output.

## Patentansprüche

1. Computerimplementiertes Verfahren, um einem Nutzer dabei zu helfen, innerhalb einer spezifizierten Zeitfrist nach Empfangen einer Anfangsposition (201) und des Zielpunkts (202) bei einem Zielpunkt (202) anzukommen, wobei das Verfahren ferner umfasst:
- Berechnen mehrerer Routen von der Anfangsposition (201) zu dem Zielpunkt (202), wobei die Routen innerhalb der spezifizierten Zeitfrist durchquert werden können,
- Schätzen eines zugänglichen geographischen Gebiets (203), das durch den Nutzer innerhalb der spezifizierten Zeitfrist mit einer vorgegebenen Geschwindigkeit durchquert werden kann, bevor er den Zielpunkt (202) erreicht, wenn er von der Anfangsposition (201) startet, wobei das zugängliche geographische Gebiet (203) in der Weise bestimmt wird, dass es die Routen und ein Gebiet zwischen den Routen enthält,
- Bereitstellen von Informationen über das geschätzte zugängliche geographische Gebiet (203) während der Reise zur Darstellung,
- Empfangen einer aktualisierten Position (201') und
- wobei das zugängliche geographische Gebiet (203) in vorgegebenen Zeitintervallen aktualisiert wird, nachdem die Zeitfrist spezifiziert worden ist und der Zielpunkt (202) empfangen worden ist, wobei die Aktualisierung des Gebiets auf der aktualisierten Position (201') und auf einem verbleibenden Anteil der Zeitfrist durch Berechnen mehrerer Routen von der aktualisierten Position (201') beruht.

2. Verfahren nach Anspruch 1, wobei der Zielpunkt (202) und die Zeitfrist durch den Nutzer spezifiziert werden.

3. Verfahren nach Anspruch 1 oder 2, wobei das zugängliche geographische Gebiet (203) auf der Grundlage einer Durchschnittsgeschwindigkeit geschätzt wird, wobei die Durchschnittsgeschwindigkeit auf der Grundlage eines Transportmittels des Nutzers bestimmt wird.

4. Verfahren nach einem der vorhergehenden Ansprüche, wobei das zugängliche geographische Gebiet (203) mehrere Markierungspunkte (204) enthält, die aus einem vorgegebenen Satz von Markierungspunkten auf Straßen in einem Straßennetz ausgewählt werden, wobei ein Umriss des zugänglichen geographischen Gebiets (203) wenigstens teilweise auf der Grundlage vorgegebener Gebiete um die Markierungspunkte bestimmt wird.

5. Verfahren nach einem der vorhergehenden Ansprüche, wobei die Anfangsposition (201) und/oder die aktualisierte Position (201') durch eine Positionsbestimmungseinheit (111) detektiert werden.

6. Verfahren nach einem der vorhergehenden Ansprüche, wobei das geschätzte zugängliche geographische Gebiet (203) in einer Darstellung einer Karte markiert wird.

7. Verfahren nach einem der vorhergehenden Ansprüche, wobei eine bestimmte Position mit dem zugänglichen geographischen Gebiet (203) verglichen wird und wobei eine Angabe, vorzugsweise eine nicht sichtbare Angabe, gegeben wird, wenn die vorgegebene Position (201) außerhalb dieses zugänglichen geographischen Gebiets (203) liegt.

8. Computerprogramm, das Anweisungen zum Ausführen eines Verfahrens nach einem der vorhergehenden Ansprüche in wenigstens einer Verarbeitungseinheit enthält.

9. System, um einem Nutzer dabei zu helfen, innerhalb einer spezifizierten Zeitfrist bei einem Zielpunkt (202) anzukommen, wobei das System eine Verarbeitungseinheit (106; 108), einen Ausgang und eine Bestimmungseinheit (111), die dafür ausgelegt ist, eine Anfangsposition und eine aktualisierte Position (201') zu detektieren, umfasst,
wobei die Verarbeitungseinheit (106; 108) dafür konfiguriert ist, mehrere Routen von der Anfangsposition (201) zu einem Zielpunkt zu berechnen, wobei die Routen innerhalb der spezifizierten Zeitfrist durchquert werden können, wenn sich der Nutzer mit einer vorgegebenen Geschwindigkeit bewegt, wobei ein zugängliches geographisches Gebiet (203) in der Weise bestimmt wird, dass es die Routen und ein Gebiet zwischen den Routen enthält, wobei der Ausgang dafür konfiguriert ist, Informationen über das geschätzte zugängliche geographische Gebiet (203) zur Darstellung für den Nutzer während der Reise bereitzustellen, und wobei die Verarbeitungseinheit (106; 108) dafür ausgelegt ist, das zugängliche geographische Gebiet (203) in vorgegebenen Zeitintervallen zu aktualisieren, nachdem die Zeitfrist spezifiziert worden ist und der Zielpunkt (202) empfangen worden ist, wobei die Aktualisierung des Gebiets auf der aktualisierten Position (201') und auf einem verbleibenden Anteil der Zeitfrist durch Berechnen mehrerer Routen von der aktualisierten Position (201') beruht.

10. System nach Anspruch 9, wobei das System eine Navigationsvorrichtung (101) umfasst, die eine satellitengestützte Navigationsvorrichtung (101) und/oder eine Mobilkommunikationsvorrichtung ist.

11. System nach Anspruch 9, wobei die Verarbeitungseinheit (106; 108) in einer mit dem Ausgang verbundenen Servereinheit (108) enthalten ist, wobei die Servereinheit dafür konfiguriert ist, die Informationen über das geschätzte zugängliche geographische Gebiet (203) an den Ausgang zu senden.

## Revendications

1. Procédé mis en oeuvre par ordinateur pour aider un utilisateur à arriver à un point de destination (202) dans une limite de durée spécifiée après réception d'une position de départ (201) et du point de destination (202), le procédé comprend en outre
- le calcul d'une pluralité d'itinéraires de la position de départ (201) au point de destination (202), dans lequel les itinéraires peuvent être traversés dans la limite de durée spécifiée,
- l'estimation d'une zone géographique accessible (203) qui peut être traversée par l'utilisateur à une vitesse prédéterminée avant d'atteindre le point de destination (202) dans la limite de durée spécifiée, lorsque l'on part de la position de départ (201), dans lequel la zone géographique accessible (203) est déterminée de telle façon qu'elle inclut les itinéraires et une zone entre les itinéraires,
- la fourniture durant le trajet, d'informations sur la zone géographique accessible (203) estimée pour présentation,
- la réception d'une position mise à jour (201') et
- dans lequel, après avoir spécifié la limite de durée et reçu le point de destination (202), la zone géographique accessible (203) est mise à jour à des intervalles de temps prédéterminés, la mise à jour de la zone étant basée sur la position mise à jour (201') et sur une partie restante de la limite de durée par le calcul d'une pluralité d'itinéraires à partir de la position mise à jour (201').

2. Procédé selon la revendication 1, dans lequel le point de destination (202) et la limite de durée sont spécifiés par l'utilisateur.

3. Procédé selon la revendication 1 ou 2, dans lequel la zone géographique accessible (203) est estimée en se basant sur une vitesse moyenne, la vitesse moyenne étant déterminée en se basant sur un moyen de transport de l'utilisateur.

4. Procédé selon l'une quelconque des revendications précédentes, dans lequel la zone géographique accessible (203) comprend une pluralité de points de marquage (204) sélectionnés à partir d'un jeu pré-déterminé de points de marquage sur des routes d'un réseau routier, un contour de la zone géographique accessible (203) étant déterminé en se basant au moins en partie sur des zones pré-déterminées autour des points de marquage.

5. Procédé selon l'une quelconque des revendications précédentes, dans lequel la position de départ (201) et/ou la position mise à jour (201') est/sont détectée(s) par une unité de détermination de la position (111).

6. Procédé selon l'une quelconque des revendications précédentes, dans lequel la zone géographique accessible (203) est marquée dans une description d'une carte.

7. Procédé selon l'une quelconque des revendications précédentes, dans lequel une position déterminée est comparée à la zone géographique accessible (203) et dans lequel une indication, de préférence une indication non-visuelle, est fournie lorsque la position déterminée (201) se situe endehors de cette zone géographique accessible (203).

8. Programme informatique comprenant des instructions pour exécuter un procédé selon l'une quelconque des revendications précédentes sur au moins une unité de traitement.

9. Système pour aider un utilisateur à arriver à un point de destination (202) dans une limite de durée spécifiée, comprenant une unité de traitement (106 ; 108), une sortie et une unité de détermination (111) adaptée pour détecter une position de départ et une position mise à jour (201'),
l'unité de traitement (106 ; 108) est configurée pour calculer une pluralité d'itinéraires de la position de départ (201) à un point de destination, dans lequel les itinéraires peuvent être traversés dans la limite de durée spécifiée, lorsque l'utilisateur se déplace à une vitesse pré-déterminée, dans lequel une zone géographique accessible (203) est déterminée de telle façon qu'elle inclut les itinéraires et une zone entre les itinéraires,
la sortie est configurée pour fournir des informations sur la zone géographique accessible (203) estimée pour présentation à l'utilisateur durant le trajet, et dans lequel l'unité de traitement (106 ; 108) est adaptée, après avoir spécifié la limite de durée et reçu le point de destination (202), pour mettre à jour la zone géographique accessible (203) à des intervalles de temps prédéterminés, la mise à jour de la zone étant basée sur la position mise à jour (201') et sur une partie restante de la limite de durée par le calcul d'une pluralité d'itinéraires à partir de la position mise à jour (201').

10. Système selon la revendication 9, dans lequel le système comprend un dispositif de navigation (101) qui est un dispositif de navigation basé sur satellite (101) et/ou un dispositif de communication mobile.

11. Système selon la revendication 9, dans lequel l'unité de traitement (106 ; 108) est incluse dans une unité de serveur (108) reliée à la sortie, l'unité de serveur est configurée pour transmettre à la sortie les informations sur la zone géographique accessible (203) estimée.
